# EUROPEAN PATENT APPLICATION

(11) **EP 4 811 651 A1**
(43) Date of publication of application: **23.09.2026**
(21) Application number: 25305388.8
(22) Date of filing: 20.03.2025
(51) Int. Cl.: H02P 29/024

(54) **SYSTEM AND METHOD OF DETECTING FAULT IN THE CURRENT SENSING FUNCTION OF AN ELECTRIC MOTOR CONTROLLER**

(71) Applicant: NXP B.V., 5656 AG Eindhoven (NL)
(72) Inventor: Santiago, Erik, 31023 Toulouse Cedex 1 (FR); Dietsch, Jérôme, 31023 Toulouse Cedex 1 (FR); Viet-Long, Bui-Tuan, 31023 Toulouse Cedex 1 (FR)
(74) Representative: Schmütz, Christian Klaus Johannes

(57) **Abstract**

A system and method of detecting fault in current sensing of an electric motor controller including a current imbalance detector and a fault detector. The electric motor controller includes a control loop using feedback current values for generating phase current signals driving an electric motor, a current sensor that provides sensed current signals indicative yet independent of the phase current signals, and an estimator that monitors operating parameters of the electric motor and provides estimated current signals. Imbalance occurs when a sum of sensed current signals is outside a threshold of a constant value. The fault detector uses the sensed current signals and the estimated current signals to determine phase criteria markers indicative of phase symmetry and compares each phase criteria marker with an average criteria marker to identify a faulty phase current sensor. The criteria markers are based on deviations between sensed and estimated current signals in each phase.

## Description

### FIELD

The present disclosure relates in general to electric motor control, and more particularly to a system and method of detecting fault in the current sensing function of an electric motor controller.

### DESCRIPTION OF THE RELATED ART

Permanent magnet synchronous motor (PMSM) drives are receiving significant attention for many industrial applications due to their fast control response, high power density, and high efficiency. PMSM drives typically include a current sensor that senses a three-phase current signal which provides essential information for the Field-oriented control (FOC), direct-torque control (DTC) used in PMSM motor control systems. A failure of a current sensor will affect the operation of the PMSM motor control system. The ability to quickly detect and to diagnose and isolate a sensor fault is an essential requirement for safe operations and fault tolerant control strategy. Because of the complex operating modes and closed-loop control behaviors, it has proven difficult for conventional diagnostic algorithms to detect a fault when the system has been affected by error sensor signals such as phase-current sensor failures and the like. A conventional detection algorithm does not work correctly when the feedback current controller is influenced by these damaged sensor signals. Conventional frequency or harmonic analysis algorithms can detect severe sensor failures (e.g., short circuits to ground) but are not capable of determining exactly when the failure occurred. Estimators for estimating the current signal, such as observers (such as a Luenberger observer or a linear observer or the like) or filters or the like, can detect severe sensor failures (such as OOR, short circuit to ground fault, etc.), but it takes a significant amount of time to diagnose degradations such as drift or gain.

### BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified block diagram of a motor control system including a fault detection and isolation (FDI) system implemented according to one embodiment.
FIG 2 is a structural block diagram of the observer of FIG. 1 according to one embodiment configured as a linear parameter-varying (LPV) observer for calculating the estimated current values from sensed angular position and speed values and loop control voltage values.
FIG. 3 is a simplified block diagram of the FDI system of FIG. 1 coupled to the safety manager including further details of the FDI system according to one embodiment.
FIG. 4 is a flowchart diagram illustrating operation of the FDI system of FIG. 1 according to one embodiment.

### DETAILED DESCRIPTION

A fault detection and isolation system for an electric motor controller as described herein includes a current balance detector and a fault detector. The electric motor controller includes a control loop that uses feedback current values for generating phase current signals used to drive an electric motor. The electric motor controller includes a current sensor configured to sense the phase current signals and to provide corresponding sensed current signals. The electric motor controller also includes an estimator configured to monitor the electric motor and to provide estimated current signals independent of the sensed current signals. The current imbalance detector is configured to detect an imbalance of the sensed current signals and to provide an imbalance indication. In response to the imbalance indication, the fault detector uses the sensed current signals and the estimated current signals to determine a phase criteria marker for each phase indicative of phase symmetry, and to compare each of the phase criteria markers with an average criteria marker to identify a faulty phase current sensor.

The current imbalance detector is configured to determine whether a sum of the sensed current signals is within a threshold amount of a predetermined constant value, such as zero. The fault detector may include a criteria calculator and comparator and a fault isolator. The criteria calculator and comparator is configured to isolate and identify the faulty phase current sensor by determining current deviations including a current deviation between each sensed current signal and a corresponding estimated current signal, by amplifying the current deviations by determining phase criteria markers including a phase criteria marker for each phase indicative of phase symmetry, and by comparing each phase criteria marker with the average criteria marker. The fault isolator and identifier is configured to determine whether one of the phase criteria markers falls below the average criteria marker while the remaining phase criteria markers rise above the average criteria marker.

In one embodiment, the criteria calculator and comparator is configured to compare each phase criteria markers with the average criteria marker during successive cycles during an imbalanced condition, and the fault isolator and identifier is configured to identify the faulty phase current sensor when a count of a number of times that one phase criteria marker is below the average criteria marker while the remaining phase criteria markers is above the average criteria marker during the successive cycles reaches a count threshold.

In one embodiment the fault detection and isolation system includes a current reconfiguration generator configured to generate reconfigured current signals using the sensed current signals and the estimated current signals, and a selection switch configured to select between the sensed current signals and the reconfigured current signals for providing selected current signals used for generating the feedback current values in the control loop. The current reconfiguration generator may generate the reconfigured current signals by replacing a sensed current signal of the faulty phase current sensor with a corresponding estimated current signal. Alternatively, the current reconfiguration generator may generate the reconfigured current signals by replacing a sensed current signal of the faulty phase current sensor with a negative sum of the remaining sense current signals.

The estimator may be a linear parameter-varying (LPV) observer and a Clarke transformation converter. The LPV observer may include an input interface and an LPV processor. The input interface is configured to provide a sensed angular speed value, a sensed angular position value, and multiple physical parameters of the electric motor, and a pair of control voltages in the control loop used for generating the phase current signals. The LPV processor may be configured to calculate estimated current values indicative of the phase current signals using the sensed angular speed value, the sensed angular position value, the pair of control voltages, and the multiple physical parameters of the electric motor. The Clarke transformation converter may be configured to convert the estimated current values into the estimated current signals. The input interface may provide trigonometric angular position values including a sine function of the sensed angular position value and a cosine function of the sensed angular position value.

Generally, the fault detection and isolation system performs current sensor fault detection based on detecting an imbalance of the sum phase current sensing, and by isolating a fault condition. When the sum of the sensed phase currents reaches or exceeds thresholds relative to the constant, an imbalance indication is provided. In response, a fault detector is activated to determine a set of deviations including a deviation between each sensed current signal and a corresponding estimated current signal, to amplify the deviations by determining phase criteria markers including a phase criteria marker for each phase indicative of phase symmetry, and to compare each phase criteria marker with an average of the criteria markers. The deviation amplification is based on the phase shift relationship between the phases and is determined using transformations including gamma values and delta values. Then, to ensure isotropy without being affected by direction, the criteria markers are determined and compared with the criteria marker average representing the relative distance between the phases for monitoring symmetry of the system. The average critical marker, which is defined as a neutral value, is used to track the equidistant asymmetry. If and when phase current measurement fails (e.g., failure of a current sensor), the distance is no longer symmetrical. In this manner, a faulty current sensor can be quickly, accurately and robustly determined.

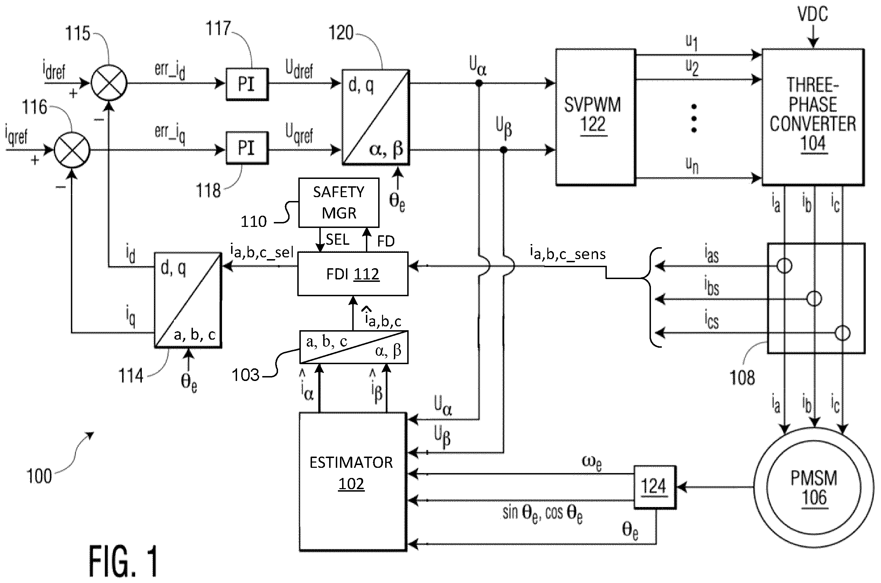

FIG. 1 is a simplified block diagram of a motor control system 100 including a fault detection and isolation (FDI) system 112 implemented according to one embodiment. The motor control system 100 may be used for any one of many different types of industrial applications, such as, for example motor drives, electric vehicle (EV) drives, flexible alternating-current (AC) transmission and distribution devices, etc. The motor control system 100 includes a three-phase converter 104 configured to convert a direct-current (DC) voltage VDC into 3 three-phase control current signals iₐ, i_{b}, and i_{c} for controlling a three-phase motor 106, such as, for example, a permanent magnet synchronous machine (PMSM) or the like. A current sensor 108 senses the three-phase current signals iₐ, i_{b}, and i_{c} provided to the motor 106 and provides sensed current signals iₐₛ, i_{bs}, and i_{cs}, respectively, which are collectively shown as i_{a,b,c_sens}. The sensed three-phase current signals i_{a,b,c_sens} are provided to respective inputs of the FDI system 112, which, during normal operation, forwards the sensed current signals substantially unmodified as selected current signals i_{a,b,c_sel}. The phase current signals of the motor provide essential information for the field-oriented control (FOC), direct-torque control (DTC) often used in PMSM motor control systems.

An estimator 102 is provided to estimate the 3 three-phase control current signals iₐ, i_{b}, and i_{c} in an independent manner with respect to the current sensor 108 and used to develop and provide three-phase balanced estimated current signals îₐ, î_{b}, and î_{c}, collectively shown as î_{a,b,c}. The estimator 102 may be implemented in any suitable manner, such as an observer (e.g., a Luenberger observer or a linear observer or the like) or a filter or the like, which generally operates to monitor the motor 106 and possibly other control loop information to independently estimate the control currents provided to the motor 106 without actually sensing the control currents. In one embodiment, the estimator 102 determines estimated current values î_{α} and î_{β} of the three-phase current signals using reference control loop voltages along with angular position and angular velocity signals from an angular speed and position sensor 124 interfaced with the motor 106. The estimated current values î_{α} and î_{β} are provided to the Clarke transformation converter 103, which performs a 2-phase to 3-phase transformation to convert the αβ-axis stationary stator current values into three-phase balanced estimated current signals îₐ, î_{b}, and î_{c}, collectively shown as î_{a,b,c}. The FDI system 112 uses the sensed current signals i_{a,b,c_sens} and the estimated current values î_{a,b,c} to identify and diagnose a failure of the current sensor 108 and provides a fault detect (FD) signal to a safety manager (MGR) 110.

Each of the blocks or elements of the motor control system 100, including those labeled 102, 103, 104, 108, 110, 112, 114, 115, 116, 117, 120, 122, and 124, are implemented by hardware circuitry, computational hardware circuitry, processing circuitry executing software, or any suitable combination thereof.

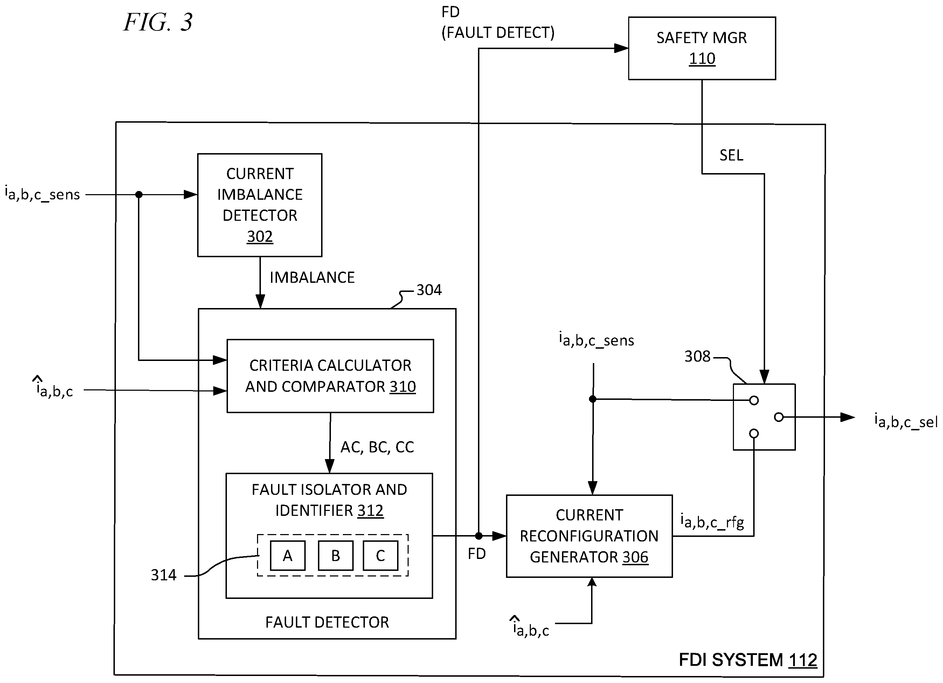

As described further herein, when a sensor fault is detected, the FDI system 112 generates reconfigured current signals i_{a,b,c_rfg} (FIG. 3), in which the sensed current signals may be replaced by the reconfigured current signals i_{a,b,c_rfg}. In one embodiment, one of the sensed current signals may be replaced by a corresponding estimated current signal to generate the reconfigured current signals i_{a,b,crfg}. The safety manager 110 outputs a selection signal SEL to the FDI system 112, which switches to provide the selected current signals i_{a,b,c_sel} using the reconfigured current signals i_{a,b,c_rfg} rather than the sensed current signals i_{a,b,c_sens}. The FDI system 112 provides the selected current signals i_{a,b,c_sel} to respective inputs of a Park transformation converter 114, which performs a transformation to dq-axis rotational currents i_{d} and i_{q} provided as feedback current control values. The Park transformation converter 114 may use an angular position value θₑ provided by the angular speed and position sensor 124 for performing the transformation.

The motor control system 100 further includes a pair of adders 115 and 116 that compare input reference current values with the feedback current control values for controlling motor operation. The adder 115 subtracts the feedback current control value i_{d} from a direct axis current reference value i_{dref} (which may be set to zero) to provide an error value err_i_{d}, and the adder 116 subtracts feedback current control value i_{q} from a quadrature axis current reference value i_{qref} to provide an error value err_i_{q}. It is noted that i_{qref} may be a quadrature reference value proportional to a desired output torque of the motor 106. The error values err_i_{d} and err_i_{q} are provided to respective inputs of a pair of proportional-integral (PI) controllers 117 and 118, which convert the error values into stator reference direct and quadrature voltages U_{dref} and U_{qref} values, respectively. The U_{dref} and U_{qref} stator reference voltages are provided to respective inputs of an inverse Park transformation converter 120, which performs a rotating-to-stationary transformation from the dq-axis to αβ-axis (which may also the angular position value θₑ provided by the angular speed and position sensor 124) to provide corresponding control voltages U_{α} and U_{β}, respectively. The control voltages U_{α} and U_{β} are provided to respective inputs of a space vector pulse-width modulation (SVPWM) modulator 122, which uses the control voltages U_{α} and U_{β} to generate a set of "n" PWM switch drive signals u₁, u₂, ... uₙ to control corresponding power switches (not shown) within phase circuits of the three-phase converter 104 for generating the three-phase current signals iₐ, i_{b}, and i_{c}.

The angular speed and position sensor 124, which is either incorporated within or otherwise interfaced with the motor 106, senses an angular speed value ωₑ and the angular position value θₑ and determines a pair of position values sin θₑ and cos θₑ. The sine and cosine position values are trigonometric functions of the angular position value θₑ, which may also be referred to as the scheduling parameter, is the angle of the synchronously rotating frame of the motor 106. The angular speed value ωₑ and the angular position value θₑ may generally be referred to as operating parameters of the motor 106, in which the corresponding pair of position values sin θₑ and cos θₑ are derived from the angular position value θₑ. Additional loop parameters may be used by the estimator 102, such as, for example, the control voltages U_{α} and U_{β}, although other parameters may be used in addition or instead. The control voltages U_{α} and U_{β} and the sensed angular speed and position values ωₑ, sin θₑ, and cos θₑ are provided to respective inputs of the estimator 102, which calculates a pair of estimated current values î_{α} and î_{β} provided to additional inputs of the FDI system 112. It is noted that a hat symbol "^" positioned above a value or variable represents an estimation of that value or variable.

As described further herein, the FDI system 112 uses the sensed current signals i_{a,b,c_sens} and the estimated current values î_{α} and î_{β} to identify any fault condition of the current sensor 108. When a fault is detected, the FDI system 112 generates reconfigured current signals i_{a,b,c_rfg} (FIG. 3) and asserts the FD signal to the safety manager 110, which switches the SEL signal accordingly. The SEL signal is used to select between the sensed current signals i_{a,b,c_sens} and the reconfigured current signals i_{a,b,c_rfg} to provide the selected current signals i_{a,b,c_sel} used in the feedback control loop of the motor control system 100.

The estimator 102 may be configured according to any one of various different types of observers or estimators. In one embodiment, the estimator 102 is configured as a linear parameter-varying (LPV) observer. The operation of an LPV observer may be represented as a mathematical model in the stationary reference frame of the motor control system 100 presented with both electrical and mechanical portions. The estimated current value î_{α} may be described according to the following equation (1): $\frac{d}{dt} {î}_{α} = - \frac{{R}_{s}}{{L}_{s}} {î}_{α} + \frac{p}{{L}_{s}} {ϕ}_{m} sin {θ}_{e} {\hat{ω}}_{e} + \frac{1}{{L}_{s}} {U}_{α} \left(t\right) + K {\left({θ}_{e}\right)}_{\left[1\right]} {Δ}_{{ω}_{e} , {θ}_{e}}$ where dx/dt denotes a derivative function of a variable x (e.g., î_{α}), R_{S} is a stator winding resistance and L_{S} is a stator winding inductance of the motor 106, p is a pole pairs number, ϕₘ is a flux leakage of the motor 106, ω̂ₑ is an estimation of the angular speed value ωₑ, K(θₑ) is a matrix value dependent upon sin θₑ and cos θₑ, or K(θₑ) = K₁ sin θₑ + K₂ cos θₑ + K₃ where K₁, K₂, and K₃ are gain values, K(θₑ)_{[i]} is the i-th row of matrix K(θₑ), and Δ_{ωₑ,θₑ} is a difference value matrix. The difference value matrix Δ_{ωₑ,θₑ} may be described according to the following equation (2): ${Δ}_{{ω}_{e} , {θ}_{e}} = \left(\left[\begin{matrix}{ω}_{e} \\ {θ}_{e}\end{matrix}\right]-\left[\begin{matrix}{\hat{ω}}_{e} \\ {\hat{θ}}_{e}\end{matrix}\right]\right) = \left[\begin{matrix}{ω}_{e} - {\hat{ω}}_{e} \\ {θ}_{e} - {\hat{θ}}_{e}\end{matrix}\right]$ where θ̂ₑ is an estimation of the angular position value θₑ. The estimated current value î_{α} may be determined by integrating the derivative function according to the following equation (3): ${î}_{α} = \int \frac{d}{dt} {î}_{α}$ In a similar manner, the estimated current value î_{β} may be described according to the following equation (4): $\frac{d}{dt} {î}_{β} = - \frac{{R}_{s}}{{L}_{s}} {î}_{β} - \frac{p}{{L}_{s}} {ϕ}_{m} cos {θ}_{e} {\hat{ω}}_{e} + \frac{1}{{L}_{s}} {U}_{β} \left(t\right) + K {\left({θ}_{e}\right)}_{\left[2\right]} {Δ}_{{ω}_{e} , {θ}_{e}}$ where the estimated current value î_{β} may be determined by integrating the derivative function according to the following equation (5): ${î}_{β} = \int \frac{d}{dt} {î}_{β}$ The estimated current values î_{α} and î_{β} may be presented in vector form according to the following equation (6): $\frac{d}{dt} \left[\begin{matrix}{î}_{α} \\ {î}_{β}\end{matrix}\right] = - \frac{{R}_{s}}{{L}_{s}} \left[\begin{matrix}{î}_{α} \\ {î}_{β}\end{matrix}\right] + \frac{p}{{L}_{s}} {ϕ}_{m} \left[\begin{matrix}sin {θ}_{e} \\ - cos {θ}_{e}\end{matrix}\right] {\hat{ω}}_{e} + \frac{1}{{L}_{s}} \left[\begin{matrix}{u}_{α} \left(t\right) \\ {u}_{β} \left(t\right)\end{matrix}\right] + K {\left({θ}_{e}\right)}_{\left[1:2\right]} \left(\left[\begin{matrix}{ω}_{e} \\ {θ}_{e}\end{matrix}\right]-\left[\begin{matrix}{\hat{ω}}_{e} \\ {\hat{θ}}_{e}\end{matrix}\right]\right)$ in which the estimated current values î_{α} and î_{β} may be determined by integrating the derivative values according to the following equation (7): $\left[\begin{matrix}{î}_{α} \\ {î}_{β}\end{matrix}\right] = \int \frac{d}{dt} \left[\begin{matrix}{î}_{α} \\ {î}_{β}\end{matrix}\right]$

The estimated angular speed value ω̂ₑ may be described according to the following equation (8): $\frac{d}{dt} {\hat{ω}}_{e} = - \frac{p}{J} {ϕ}_{m} sin {θ}_{e} {î}_{α} + \frac{p}{J} {ϕ}_{m} cos {θ}_{e} {î}_{β} - \frac{{F}_{ν}}{J} {\hat{ω}}_{e} + K {\left({θ}_{e}\right)}_{\left[3\right]} {Δ}_{{ω}_{e} , {θ}_{e}}$ where J is an inertia of rotor and load and Fᵥ is a coefficient of viscous friction of the motor 106. The estimated angular position value θ̂ₑ may be described according to the following equation (9): $\frac{d}{dt} {\hat{θ}}_{e} {\hat{ω}}_{e} + K {\left({θ}_{e}\right)}_{\left[4\right]} {Δ}_{{ω}_{e} , {θ}_{e}}$ The estimated values ω̂ₑ and θ̂ₑ may be determined by integrating the derivative values according to the following set of equations (10): ${\hat{ω}}_{e} = \int \frac{d}{dt} {\hat{ω}}_{e} , {\hat{θ}}_{e} ≅ \int \frac{d}{dt} {\hat{ω}}_{e}$

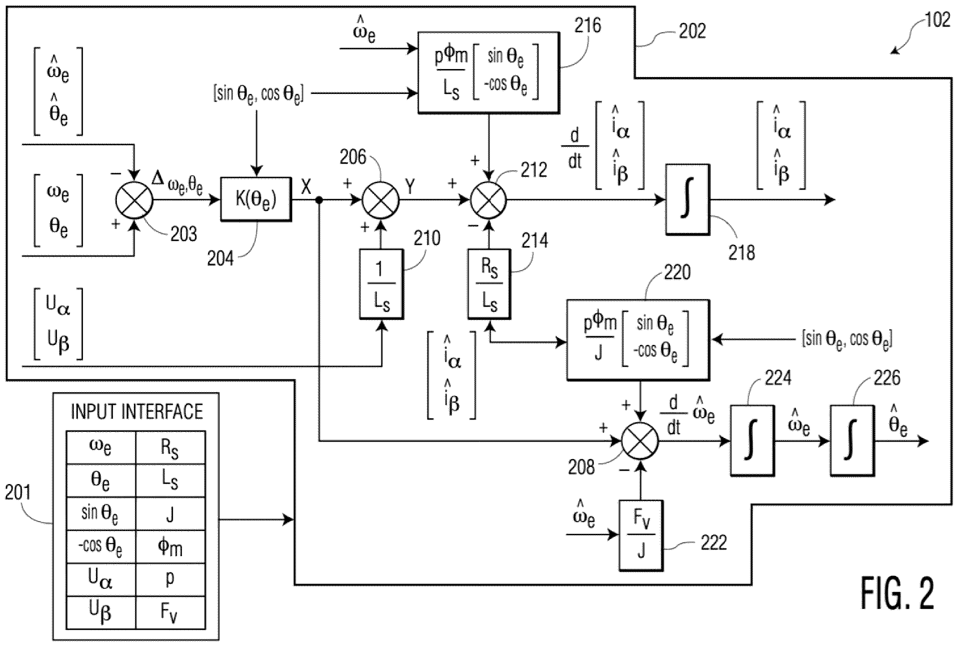

FIG. 2 is a structural block diagram of the estimator 102 configured as an LPV observer according to one embodiment for calculating the estimated current values î_{α} and î_{β} from the sensed values ωₑ, θₑ, sin θₑ, cos θₑ, and the control voltage values U(t) = U_{α} and U_{β} according to the preceding equations (1) through (10). The estimator 102 includes an input interface 201 and an LPV processor 202 that is configured to receive input values provided from the input interface 201 and to calculate or otherwise determine the estimated current values î_{α} and î_{β}. The LPV processor 202 includes various functional blocks as further described herein that are implemented by hardware circuitry, computational hardware circuitry, processing circuitry executing software, or any suitable combination thereof.

The input interface 201 may be configured according to the types of input values received or stored. For example, the input interface 201 may include buffer or filter circuitry for receiving and forwarding the sensed values ωₑ, θₑ, sin θₑ, cos θₑ, and the control voltage values U(t) = U_{α} and U_{β}. The input interface 201 may include calculation circuitry for calculating the sin θₑ and cos θₑ values based on θₑ for embodiments in which the angular speed and position sensor 124 only provides the θₑ value. The input interface 201 may further include memory devices, such as registers or the like, for storing digital values indicative of the constant physical parameters of the motor 106. The illustrated physical parameters of the motor 106 include the stator winding resistance R_{S}, the stator winding inductance L_{S}, the inertia of rotor and load J, the flux leakage ϕₘ, and the coefficient of viscous friction Fᵥ. The input interface 201 may receive or otherwise store a value indicative of the pole pairs number p.

The LPV processor 202 includes an input adder 203 along with additional adders 206, 212, and 208, gain blocks 204, 210, 214, 216, 220, and 222 in which gain blocks 216 and 220 are variable gain blocks, and integrators 218, 224, and 226. The input adder 203 subtracts calculated feedback parameters [ω̂ₑ, θ̂ₑ] from the sensed input parameters [ωₑ, θₑ] and outputs the difference value matrix Δωₑ,θₑ according to equation (2). The difference value matrix Δωₑ,θₑ and the sin θₑ and cos θₑ values are provided to the gain block 204 incorporating the gain-scheduling value of the angular position K(θₑ). The gain block 204 outputs corresponding values X provided to inputs of the adders 206 and 208. The control voltages U_{α} and U_{β} are provided to the gain block 210, which effectively divides each by Lₛ to provide divided values to other inputs of the adder 206. The adder 206 adds the output of gain block 210 to the X values and outputs values Y to inputs of the adder 212. The estimated current values î_{α} and î_{β} are both provided to inputs of the gain block 214 with gain Rₛ/Lₛ, which provides corresponding output values to other inputs of the adder 212. The parameter ω̂ₑ is provided to an input of the variable gain block 216 having gain value $\frac{{pϕ}_{m}}{{L}_{s}} \left[\begin{matrix}sin {θ}_{e} \\ - cos {θ}_{e}\end{matrix}\right]$, in which the adder 212 adds Y to the output of the gain block 216 and subtracts the outputs of the gain block 214 and provides derivative values d[î_{α}, î_{β}]/dt to the integrator 218, which outputs the estimated current values î_{α} and î_{β}.

The estimated current values î_{α} and î_{β} are also provided to the input of the variable gain block 220 with gain value $\frac{{pϕ}_{m}}{J} \left[\begin{matrix}sin {θ}_{e} \\ - cos {θ}_{e}\end{matrix}\right]$, which has corresponding outputs provided to other inputs of the adder 208. The parameter ω̂ₑ is provided to the input of the gain block 222 having a gain of Fv/J and having an output provided to another input of the adder 208. The adder 208 adds X to the outputs of the gain block 220 and subtracts the output of the gain block 222 and provides a derivative output value d(ω̂ₑ)/dt to an input of the integrator 224, which provides the estimated value ω̂ₑ. The estimated value ω̂ₑ is provided to the input of the integrator 226 providing the estimated value θ̂ₑ. As previously described, one or both of the values ω̂ₑ and θ̂ₑ are fed back to various functional blocks including the input adder 203.

The estimator 102, when configured as an LPV observer, reliably estimates phase current values that correspond with phase current signals driving the motor 106 using reference control loop voltages along with angular position and angular velocity signals from a resolver sensor interfaced with the motor. The estimated current values provided by the estimator 102 are determined independently of the sensed phase current signals. If the current sensor 108 is damaged, the FDI system 112 detects the failure and replaces the sensed current signals with reconfigured current signals in the control loop maintain operation. The reconfigured current signals may use one or more of the estimated current signals. An LPV observer as described herein adapts to angular position and speed parameters provided by an angular speed and position sensor and to reference control loop voltages, and estimates the nonlinear observer gains to increase the performance and robustness of the estimated current values. The LPV observer ensures good estimation of the effects of frequency disturbances and uncertain inputs and also ensures stability and reliability in diagnosing sensor failures as well as feasibility in fault tolerance control.

In alternative embodiments, the estimator 102 may be configured according to any type of phase current observer for estimating the phase current signals. Also, the estimator 102 may be configured to provide the phase current estimates îₐ, î_{b}, and î_{c} directly rather than providing estimated current values î_{α} and î_{β} such that the Clarke transformation converter 103 may be removed.

FIG. 3 is a simplified block diagram of the FDI system 112 coupled to the safety manager 110 including further details of the FDI system 112 according to one embodiment. The FDI system 112 includes a current imbalance detector 302, a fault detector 304, a current reconfiguration generator 306, and a selection switch 308. The sensed current signals i_{a,b,c_sens} are provided to respective inputs of the current imbalance detector 302 and the fault detector 304. The current imbalance detector 302 asserts an IMBALANCE signal to activate the fault detector 304 when a current imbalance is detected as further described herein. The estimated current signals î_{a,b,c} and the sensed current signals i_{a,b,c_sens} are provided to respective inputs of the fault detector 304, which detects, isolates, and identifies and a fault and generates the fault detection signal FD when activated as further described herein. The current reconfiguration generator 306 uses the sensed current signals i_{a,b,c_sens} and the estimated current signals î_{a,b,c} to generate the reconfigured current signals i_{a,b,c_rfg}. The sensed current signals i_{a,b,c_sens} and the reconfigured current signals i_{a,b,c_rfg} are provided to respective data inputs of the selection switch 308, which outputs the selected current signals i_{a,b,c_scl}. The fault detector 304 provides the FD signal to the safety manager 110, which outputs the SEL signal to a select control input of the selection switch 308.

In one embodiment, the current imbalance detector 302 is configured with an adder or the like that sums the sensed current signals i_{a,b,c_sens} together to determine a SUM value, and to determine whether the SUM value is equal to or substantially equal to a constant, such as, for example, zero. Since the actual current signals may have a small amount of error and since the current sensor 108 also may have a small amount of measurement error, the SUM value is considered to be substantially equal to a constant value when within a threshold level above and below the constant value. In one embodiment, the current imbalance detector 302 determines whether the SUM value is less than (or less than or equal to) an upper threshold THᵤₚₚₑᵣ or greater than (or greater than or equal to) a lower threshold TH_{lower}. The upper and lower thresholds THᵤₚₚₑᵣ and TH_{lower} are selected to take into consideration a maximum amount of allowable error to ensure that SUM remains within the upper and lower thresholds. The upper and lower thresholds may be empirically determined for a given configuration. In one embodiment, the nominal value of SUM is zero so that THᵤₚₚₑᵣ and TH_{lower} are selected above and below zero, respectively, by a suitable threshold amount.

The fault detector 304 further includes a criteria calculator and comparator 310 and a fault isolator and identifier 312. When activated by the current imbalance detector 302, the criteria calculator and comparator 310 uses the sensed current signals i_{a,b,c_sens} and the estimated current signals î_{a,b,c} to calculate a criteria marker for each of the three phases, to calculate an average criteria marker for the phases, and to compare each phase criteria marker with the average criteria marker to determine a fault condition for each of the phases. In one embodiment, three fault condition indications, shown as AC, BC, and CC, are provided to the fault isolator and identifier 312. The criteria calculator and comparator 310 and the fault isolator and identifier 312 collectively track repetitive fault conditions of each phase to confirm or otherwise verify a fault condition of one of the phase current sensors of the current sensor 108. In one embodiment, for example, the fault isolator and identifier 312 includes a set of counters 314, one for each of the three phases A, B, and C, and uses corresponding count values A, B, and C for counting faults per phase. When any count value reaches a count threshold verifying a current sensor fault for the corresponding phase, the fault isolator and identifier 312 generates the FD signal. When a sensor fault is verified as indicated by the FD signal, the current reconfiguration generator 306 uses the sensed current signals i_{a,b,c_sens} and the estimated current signals î_{a,b,c} to generate the reconfigured current signals i_{a,b,c_rfg}. The FD signal is also received by the safety manager 110, which determines whether and when to assert the SEL signal for controlling the selected current signals i_{a,b,c_sel}. The specific functionality and operation of the safety manager 110 is not further described.

The safety manager 110 and each of the blocks or elements of the of the FDI system 112, including the current imbalance detector 302, the fault detector 304, the current reconfiguration generator 306, the selection switch 308, criteria calculator and comparator 310, fault isolator and identifier 312, and the set of counters 314, are implemented by hardware circuitry, computational hardware circuitry, processing circuitry executing software, or any suitable combination thereof..

It is noted that the illustrated the combination of the FDI system 112 and the safety manager 110 shown in FIGs 1 and 3 is shown in a simplified form. Generally, the FDI system 112 is part of a safety mechanism, and the management and processing functions are performed by the safety manager 110, in which the FDI system 112 and the safety manager 110 may communicate with each other as part of intra-core communications (not shown). The current reconfiguration functions of the current reconfiguration generator 306, for example, may be performed instead or at least in part by the safety manager 110 since it may involve processing and decision functions. In that case, when the safety manager 110 senses assertion of the FD signal by the fault isolator and identifier 312, it samples the information of the fault isolator and identifier 312 including the counts A, B, and C, and determines the reconfigured current signals i_{a,b,c_rfg} accordingly among other processing functions. It then asserts the SEL signal for selecting the i_{a,b,c_sel} signals.

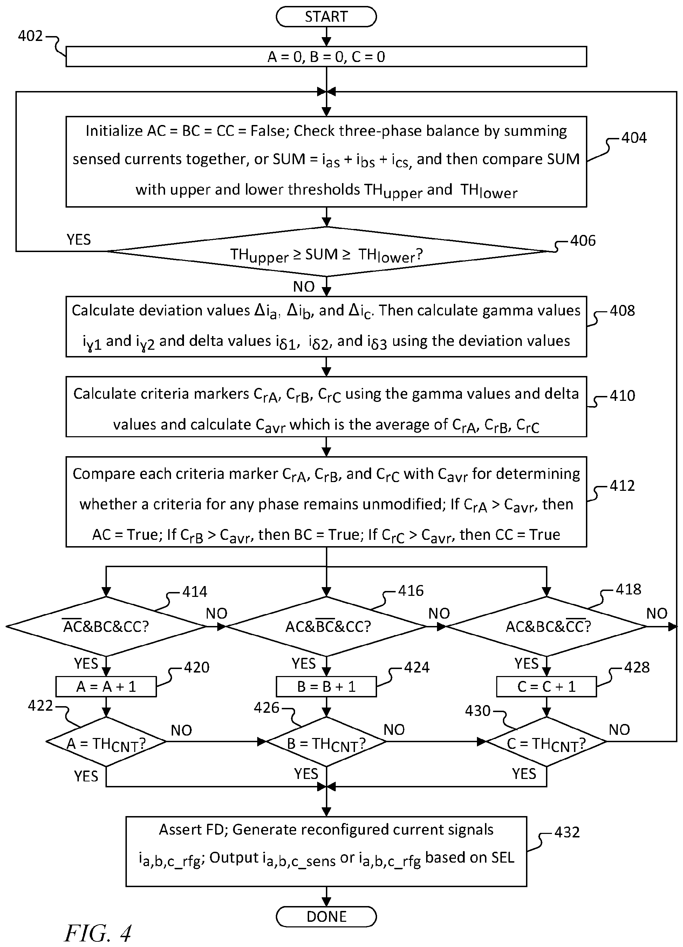

FIG. 4 is a flowchart diagram illustrating operation of the FDI system 112 according to one embodiment. At a first block 402, after restart or power-on reset (POR) or the like, a set of count values A, B, and C are each initially set to zero. The count values A, B, and C correspond with the three phases, namely, phase A, phase B, and phase C, respectively, of the three-phase converter 104 driving the motor 106 with the three phase currents iₐ, i_{b}, and i_{c}, respectively. Operation then advances to block 404, in which three binary fault condition values AC, BC, and CC, described further herein, are each set to false, and then the current balance of the three phases is checked as performed by the current imbalance detector 302. Although each of the three phase currents iₐ, i_{b}, and i_{c} (as measured by the corresponding sensed currents iₐₛ, i_{bs}, and i_{cs}) vary continuously over time during normal operation, the sum of the three phase currents should be constant, such as, for example, zero. Thus, the sensed currents iₐₛ, i_{bs}, and i_{cs} are added together to calculate a SUM of the sensed current signals and then SUM is compared with upper and lower thresholds THᵤₚₚₑᵣ and TH_{lower}, respectively, at next block 406. In one embodiment, THᵤₚₚₑᵣ is a relatively small threshold value above zero and TH_{lower} is a relatively small threshold value below zero, in which the magnitudes of the threshold values may be the same or may be different.

At 406, it is queried whether the currents are balanced, meaning that SUM is within a threshold amount of a constant, such as zero. If SUM has not exceeded either of the THᵤₚₚₑᵣ or TH_{lower} thresholds (e.g., if THᵤₚₚₑᵣ ≥ SUM ≥ TH_{lower}), then operation loops back to block 404, and operation loops between blocks 404 and 406 while the currents remain balanced. It is noted that the thresholds may be configured such that the inquiry at block 406 is whether SUM has reached (rather than exceeded) either threshold (e.g., if THᵤₚₚₑᵣ > SUM > TH_{lower}). If a current imbalance is detected at block 406, operation advances instead to block 408. With reference to FIG. 3, when the current imbalance detector 302 detects the imbalance, it asserts the IMBALANCE signal to activate operation of the fault detector 304.

At block 408, the criteria calculator and comparator 310 of the fault detector 304 calculates deviation values Δi, Δi_{b}, and Δi_{c} according to the following set of equations (11): $\begin{matrix}{Δi}_{a} = {i}_{as} - {î}_{a} \\ {Δi}_{b} = {i}_{bs} - {î}_{b} \\ {Δi}_{c} = {i}_{cs} - {î}_{c}\end{matrix}$ In this manner, a deviation value is determined for each phase A, B, and C, in which each deviation value is a difference between a sensed current signal and an estimated current signal. The criteria calculator and comparator 310 then uses the deviation values to calculate gamma values i_{γ1} and i_{γ2} according to the following pair of equations (12): $\begin{matrix}{i}_{γ 1} = {Δi}_{a} \\ {i}_{γ 2} = - \left({Δi}_{b}+{Δi}_{c}\right)\end{matrix}$ The criteria calculator and comparator 310 also uses the deviation values to calculate delta values i_{δ1}, i_{δ2}, and i_{δ3} according to the following set of equations (13): $\begin{matrix}{i}_{δ 1} = \frac{\sqrt{3}}{3} \left({Δi}_{b}-{Δi}_{c}\right) \\ {i}_{δ 2} = \frac{\sqrt{3}}{3} \left({Δi}_{a}+2{Δi}_{b}\right) \\ {i}_{δ 3} = - \frac{\sqrt{3}}{3} \left({Δi}_{a}+2{Δi}_{c}\right)\end{matrix}$

Operation then advances to block 410, in which the criteria calculator and comparator 310 calculates a criteria marker for each phase C_{rA}, C_{rB}, and C_{rC}, according to the following set of equations (14): $\begin{matrix}{C}_{{r}_{A}} = \left({i}_{{γ}_{2}}^{2}+{i}_{{δ}_{1}}^{2}\right) \\ {C}_{{r}_{B}} = \left({i}_{{γ}_{1}}^{2}+{i}_{{δ}_{3}}^{2}\right) \\ {C}_{{r}_{C}} = \left({i}_{{γ}_{1}}^{2}+{i}_{{δ}_{2}}^{2}\right)\end{matrix}$ and also calculates an average of an average of the criteria markers according to the following equation (15): ${C}_{avr} = \frac{{C}_{{r}_{A}} + {C}_{{r}_{B}} + {C}_{{r}_{C}}}{3}$

Operation then advances to block 412, in which each criteria marker C_{rA}, C_{rB}, and C_{rC} is compared by the criteria calculator and comparator 310 to the average criteria marker Cₐᵥᵣ to determine whether any of the criteria markers remains unmodified. In one embodiment, if C_{rA} > Cₐᵥᵣ, then the first binary fault condition value AC is set True, if C_{rB} > Cₐᵥᵣ, then the second binary fault condition value BC is set True, and if C_{rC} > Cₐᵥᵣ, then the third binary fault condition value CC is set True. Operation then advances to blocks 414, 416, and 418, either sequentially or in parallel, in which the binary values AC, BC, and CC are compared in respective pairs by the fault isolator and identifier 312 to isolate a possible faulty phase current sensor. If AB is false and BC and CC are both True, or if A̅C̅&BC&CC = True (in which an overstrike indicates logical inversion and "&" denotes the Boolean logic AND function) as determined at block 414, then there is a potential fault of the phase A current sensor. If AC and CC are both True and BC is false, or if AC&B̅C̅&CC = True as determined at block 416, then there is a potential fault of the phase B current sensor. If AC and BC are both True and CC is false, or if AC&BC&C̅C̅ = True as determined at block 418, then there is a potential fault of the phase C current sensor. These operations performed by the fault isolator and identifier 312 are used to determine whether there is a fault in a phase current sensor of a given phase A, B or C. If not, operation loops back to block 404 to repeat the process. Usually, however, if an imbalance is detected at block 406, then there is at least one fault of the current sensor 108 and at least one of the criteria markers remains unmodified indicating a fault of a corresponding phase current detector as performed by the fault isolator and identifier 312.

If A̅C̅&BC&CC = True as determined at block 414, then operation advances to block 420 in which a fault may exist in phase A, so that the corresponding count A is incremented by the fault isolator and identifier 312. Then operation advances to block 422 in which it is determined by the fault isolator and identifier 312 whether the count A has reached a count threshold TH_{CNT}. Also, if AC&B̅C̅&CC = True as determined at block 416, then operation advances to block 424 in which a fault may exist in phase B, so that the corresponding count B is incremented by the fault isolator and identifier 312. Then operation advances to block 426 in which it is determined by the fault isolator and identifier 312 whether the count B has reached the count threshold TH_{CNT}. Similarly, if AC&BC&C̅C̅ = True as determined at block 418, then operation advances to block 428 in which a fault may exist in phase C, so that the corresponding count C is incremented by the fault isolator and identifier 312. Then operation advances to block 430 in which it is determined by the fault isolator and identifier 312 whether the count C has reached the count threshold TH_{CNT}. If none of the counts A, B, and C have not reached the count threshold, then operation loops back to block 404 to repeat the process.

When any one of the counts A, B, or C has reached the count threshold TH_{CNT}, then operation instead advances to block 432 in which the fault detect signal FD is asserted by the fault isolator and identifier 312 to notify the safety manager 110, and the current reconfiguration generator 306 generates the reconfigured current signals i_{a,b,c_rfg}. If and when the safety manager 110 switches the SEL signal in response, then the selection switch 308 selects the reconfigured current signals i_{a,b,c_rfg} as the selected current signals i_{a,b,c_sel}, and operation is completed.

In most cases, a single sensor fault results in only one of the binary expressions A̅C̅&BC&CC, AC&B̅C̅&CC, and AC&BC&C̅C̅ to be true during most if not all iterations so that only one of the counts A, B, or C reaches the count threshold TH_{CNT}. Although unlikely, two or even all three of the current sensors may have failed at about the same time. In addition, it is noted that even a single sensor fault can cause two sensor faults to be flagged at the same time. In any of these cases, two or more of the binary expressions may be true so that two or more of the counts A, B, and C may reach the count threshold TH_{CNT}. Also, even if one of the counts reaches the count threshold first, the fault isolator and identifier 312 may be configured to monitor the other count values to determine whether more than one fault is indicated. Whenever two or more sensor faults are flagged, the safety manager 110 may be configured to send a notification and may even shut down the motor control system 100 and the motor 106 in a safe manner. Even when a single fault may cause two sensor faults to be flagged, the system may not be able to determine which current sensor signal to replace and may have to shut off the system.

The current reconfiguration generator 306 may operate according to any one of several embodiments to generate the reconfigured current signals i_{a,b,c_rfg} in the event of a single failure. In one embodiment, the current reconfiguration generator 306 only replaces the sensed current signal of the phase having the faulty phase current sensor with the corresponding estimated current signal. For example, if a fault is determined in phase A, then the sensed current signal iₐₛ of the sensed current signals signals i_{a,b,c_sens} is replaced by the corresponding estimated current signal îₐ so that the reconfigured current signals i_{a,b,c_rfg} = îₐ, i_{bs}, i_{cs}. In other words, only the sense current signal iₐₛ is replaced by the corresponding estimated current signal îₐ and the other sensed current signals i_{bs} and i_{cs} for the phases B and C remain active in the control loop. In another embodiment, the current reconfiguration generator 306 replaces the sensed current signal of the phase having the faulty phase current sensor with the negative sum of the other two sensed current signals to maintain current balance. For example, if a fault is determined in phase A, then the sensed current signal iₐₛ of the sensed current signals signals i_{a,b,c_sens} is replaced by i_{a_rfg} = - (i_{bs} + i_{cs}), so that the reconfigured current signals i_{a,b,c_rfg} = i_{a_rfg}, i_{bs}, i_{cs}. Since it is desired to maintain current balance such that the sum of the phases is zero, i_{a,b,c_rfg} = i_{a_rfg} + i_{bs} + i_{cs} = - (i_{bs} + i_{cs}) + i_{bs} + i_{cs} = i_{bs} - i_{bs} + i_{cs} - i_{cs} = 0.

In one embodiment, current sensor fault detection performed by the FDI system 112 is based on detecting an imbalance of the sum of three-phase current sensing, such as performed by the current balance detector 302. In a balanced and symmetrical system, the sum of the phase currents should be a constant, such as zero. When the sum of the sensed phase currents reaches or exceeds thresholds relative to the constant, the IMBALANCE signal is asserted indicating an imbalanced condition activating the fault detector 304. The criteria calculator and comparator 304 of the fault detector 304, when activated by the imbalance indication, determines a set of deviations including a deviation between each sensed current signal and a corresponding estimated current signal (set of equations 11), amplifies the deviations by determining phase criteria markers including a phase criteria marker for each phase indicative of phase symmetry, and by comparing each phase criteria marker with an average of the criteria markers.

In a three-phase system, the amplification of the deviations is based on the 120-degree phase shift relation between the phases and is determined using transformations including gamma values (set of equations 12) and delta values (set of equations 13). Then, to ensure isotropy without being affected by direction, the criteria markers are determined (set of equations 14) and compared with the criteria marker average (determined according to equation 15) representing the relative distance between the phases for monitoring symmetry of the system. If and when phase current measurement fails (e.g., failure of a current sensor), the distance is no longer symmetrical. The average critical marker, which is defined as a neutral value, is used to track the equidistant asymmetry. In this manner, a faulty current sensor can be quickly, accurately and robustly determined.

One or more embodiments of the present disclosure may include features recited in the following numbered clauses:
1. A fault detection and isolation system for an electric motor controller, the electric motor controller including a control loop that uses feedback current values for generating phase current signals driving an electric motor, a current sensor configured to sense the phase current signals and to provide corresponding sensed current signals, and an estimator configured to monitor operating parameters of the electric motor and to provide estimated current signals independent of the sensed current signals, the fault detection and isolation system comprising: a current imbalance detector configured to detect an imbalance of the sensed current signals and to assert an imbalance signal when an imbalance is detected; and a fault detector configured, in response to assertion of the imbalance signal, to use the sensed current signals and the estimated current signals to determine a plurality of phase criteria markers indicative of phase symmetry including a phase criteria marker for each phase, and to compare each of the plurality of phase criteria markers with an average criteria marker to identify a faulty phase current sensor.
2. The fault detection and isolation system of clause 1, wherein the current imbalance detector is configured to determine whether a sum of the sensed current signals is within a threshold amount of a predetermined constant value.
3. The fault detection and isolation system of clause 1 or 2, wherein the sensed current signals comprise sensed current signals signals iₐₛ, i_{bs}, and i_{cs}, wherein the estimated current signals comprise estimated current signals îₐ, î_{b}, and î_{c}, and wherein the fault detector is configured to determine deviation values Δiₐ = iₐₛ - îₐ, Δi_{b} = i_{bs} - î_{b}, and Δi_{c} = i_{cs} - î_{c}, to determine gamma values iγ₁ = Δiₐ, and iγ₂ = - (Δi_{b} + Δi_{c}), to determine delta values i_{δ1} = $\frac{\sqrt{3}}{3} \left({Δi}_{b}-{Δi}_{c}\right) , {i}_{δ 2} = \frac{\sqrt{3}}{3} \left({Δi}_{a}+2{Δi}_{b}\right) , {i}_{δ 3} = - \frac{\sqrt{3}}{3} \left({Δi}_{a}+2{Δi}_{c}\right)$, to determine the plurality of phase criteria markers as ${C}_{{r}_{A}} = \left({i}_{{γ}_{2}}^{2}+{i}_{{δ}_{1}}^{2}\right) , {C}_{{r}_{B}} = \left({i}_{{γ}_{1}}^{2}+{i}_{{δ}_{3}}^{2}\right)$, and ${C}_{{r}_{C}} = \left({i}_{{γ}_{1}}^{2}+{i}_{{δ}_{3}}^{2}\right)$, to determine the average criteria marker Cₐᵥᵣ as Cₐᵥᵣ = (C_{rA} + C_{rB} + C_{rC})/3, and to compare each of the plurality of phase criteria markers C_{rA}, C_{rB}, and C_{rC} with the average criteria marker Cₐᵥᵣ to identify the faulty phase current sensor.
4. The fault detection and isolation system of any of clause 1 to 3, wherein the fault detector comprises: a criteria calculator and comparator configured to, in response to assertion of the imbalance signal, determine a plurality of current deviations including a current deviation between each sensed current signal and a corresponding estimated current signal, amplify the plurality of current deviations by determining a plurality of phase criteria markers indicative of phase symmetry including a phase criteria marker for each phase, and compare each of the plurality of phase criteria markers with the average criteria marker; and a fault isolator and identifier configured to isolate and identify the faulty phase current sensor by determining whether one of the plurality of phase criteria markers falls below the average criteria marker while the remaining ones of the plurality of phase criteria markers rise above the average criteria marker.
5. The fault detection and isolation system of clause 1 to 4, wherein the fault detector comprises: a criteria calculator and comparator configured to compare each of the plurality of phase criteria markers with the average criteria marker during successive cycles while the imbalance is detected; and a fault isolator and identifier configured to identify the faulty phase current sensor when a count of a number of times that one of the plurality of phase criteria markers is below the average criteria marker while each of remaining ones of the plurality of phase criteria markers is above the average criteria marker during the successive cycles reaches a count threshold.
6. The fault detection and isolation system of clause 1 to 5, further comprising: a current reconfiguration generator configured to generate reconfigured current signals using the sensed current signals and the estimated current signals; and a selection switch configured to select between the sensed current signals and the reconfigured current signals for providing selected current signals used for generating the feedback current values.
7. The fault detection and isolation system of clause 6, wherein the current reconfiguration generator generates the reconfigured current signals by replacing a sensed current signal of the faulty phase current sensor with a corresponding estimated current signal.
8. The fault detection and isolation system of clause 6, wherein the current reconfiguration generator generates the reconfigured current signals by replacing a sensed current signal of the faulty phase current sensor with a negative sum of the remaining sense current signals.
9. The fault detection and isolation system of clause 1 to 8, wherein the estimator comprises: a linear parameter-varying (LPV) observer, comprising: an input interface configured to provide a sensed angular speed value, a sensed angular position value, and a plurality of physical parameters of the electric motor, and to provide a pair of control voltages in the control loop used for generating the phase current signals; and an LPV processor including circuitry, the LPV processor configured to calculate estimated current values indicative of the phase current signals using the sensed angular speed value, the sensed angular position value, the pair of control voltages, and the plurality of physical parameters of the electric motor; and a Clarke transformation converter configured to convert the estimated current values into the estimated current signals.
10. The fault detection and isolation system of clause 9, wherein the input interface provides trigonometric angular position values comprising a sine function of the sensed angular position value and a cosine function of the sensed angular position value; and wherein the plurality of physical parameters of the electric motor includes a stator winding inductance, a stator winding resistance, flux leakage, and inertia of rotor and load.
11. A method of detecting and isolating a faulty current sensor of an electric motor controller, the electric motor controller including a control loop that uses feedback current values for generating phase current signals driving an electric motor, the current sensor configured to sense the phase current signals and to provide corresponding sensed current signals, and an estimator configured for monitoring operating parameters of the electric motor and providing estimated current signals independent of the sensed current signals, the method comprising: detecting an imbalance of the sensed current signals and asserting an imbalance signal indicative thereof; and using, in response to assertion of the imbalance signal, the sensed current signals and the estimated current signals to determine a plurality of phase criteria markers indicative of phase symmetry including a phase criteria marker for each phase, and comparing each of the plurality of phase criteria markers with an average criteria marker to identify a faulty phase current sensor.
12. The method of clause 11, wherein the detecting an imbalance comprises determining whether a sum of the sensed current signals is within a threshold amount of a predetermined constant value.
13. The method of clause 11 or 12, wherein the sensed current signals comprise sensed current signals signals iₐₛ, i_{bs}, and i_{cs}, and wherein the estimated current signals comprise estimated current signals îₐ, î_{b}, and î_{c}, the method further comprising:
   determining deviation values Δiₐ = iₐₛ - îₐ, Δi_{b} = i_{b}, - î_{b}, and Δi_{c} = i_{cs} - î_{c};
   determining gamma values iγ₁ = Δiₐ and iγ₂ = - (Δi_{b} + Δi_{c});
   determining delta values ${i}_{δ 1} = \frac{\sqrt{3}}{3} \left({Δi}_{b}-{Δi}_{c}\right) , {i}_{δ 2} = \frac{\sqrt{3}}{3} \left({Δi}_{a}+2{Δi}_{b}\right)$, i_{δ3} = $- \frac{\sqrt{3}}{3} \left({Δi}_{a}+2{Δi}_{c}\right)$;
   determining the plurality of phase criteria markers as ${C}_{{r}_{A}} = \left({i}_{{γ}_{2}}^{2}+{i}_{{δ}_{1}}^{2}\right) , {C}_{{r}_{B}} = \left({i}_{{γ}_{1}}^{2}+\right.$ $\left.{i}_{{δ}_{3}}^{2}\right)$, and ${C}_{{r}_{C}} = \left({i}_{{γ}_{1}}^{2}+{i}_{{δ}_{3}}^{2}\right)$;
   determining the average criteria marker Cₐᵥᵣ as Cₐᵥᵣ = (C_{rA} + C_{rB} + C_{rC})/3;
   comparing each of the plurality of phase criteria markers C_{rA}, C_{rB}, and C_{rC} with the average criteria marker Cₐᵥᵣ to identify the faulty phase current sensor.
14. The method of clause 11 to 13, in response to assertion of the imbalance signal, further comprising: determining a plurality of current deviations including determining a current deviation between each sensed current signal and a corresponding estimated current signal; amplifying the plurality of current deviations by determining a plurality of phase criteria markers indicative of phase symmetry including a phase criteria marker for each phase; comparing each of the plurality of phase criteria markers with the average criteria marker; and determining whether one of the plurality of phase criteria markers falls below the average criteria marker while the remaining ones of the plurality of phase criteria markers rise above the average criteria marker.
15. The method of clause 11 to 14, further comprising: comparing each of the plurality of phase criteria markers with the average criteria marker during successive cycles while the imbalance is detected; and counting a number of times that one of the plurality of phase criteria markers is below the average criteria marker while each of remaining ones of the plurality of phase criteria markers is above the average criteria marker during the successive cycles; and identifying the faulty phase current sensor when the counting reaches a count threshold.
16. The method of clause 11 to 15, further comprising: generating reconfigured current signals using the sensed current signals and the estimated current signals; and selecting between the sensed current signals and the reconfigured current signals for providing selected current signals used for generating the feedback current values.
17. The method of clause 11 to 16, wherein the generating the reconfigured current signals comprises replacing a sensed current signal of the faulty phase current sensor with a corresponding estimated current signal.
18. The method of clause 11 to 17, wherein the generating the reconfigured current signals comprises replacing a sensed current signal of the faulty phase current sensor with a negative sum of the remaining sense current signals.
19. The method of clause 11 to 18, wherein the monitoring operating parameters of the electric motor and providing estimated current signals independent of the sensed current signals, comprises: providing a sensed angular speed value, a sensed angular position value, and a plurality of physical parameters of the electric motor; providing a pair of control voltages in the control loop used for generating the phase current signals; calculating estimated current values indicative of the phase current signals using the sensed angular speed value, the sensed angular position value, the pair of control voltages, and the plurality of physical parameters of the electric motor; and converting the estimated current values into the estimated current signals according to a Clarke transformation.
20. The method of clause 19, further comprising: providing trigonometric angular position values comprising providing a sine function of the sensed angular position value and a cosine function of the sensed angular position value; and wherein the providing a plurality of physical parameters of the electric motor includes providing a stator winding inductance, a stator winding resistance, flux leakage, and inertia of rotor and load.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, variations of positive circuitry or negative circuitry may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A fault detection and isolation system for an electric motor controller, the electric motor controller including a control loop that uses feedback current values for generating phase current signals driving an electric motor, a current sensor configured to sense the phase current signals and to provide corresponding sensed current signals, and an estimator configured to monitor operating parameters of the electric motor and to provide estimated current signals independent of the sensed current signals, the fault detection and isolation system comprising:
a current imbalance detector configured to detect an imbalance of the sensed current signals and to assert an imbalance signal when an imbalance is detected; and
a fault detector configured, in response to assertion of the imbalance signal, to use the sensed current signals and the estimated current signals to determine a plurality of phase criteria markers indicative of phase symmetry including a phase criteria marker for each phase, and to compare each of the plurality of phase criteria markers with an average criteria marker to identify a faulty phase current sensor.

2. The fault detection and isolation system of claim 1, wherein the current imbalance detector is configured to determine whether a sum of the sensed current signals is within a threshold amount of a predetermined constant value.

3. The fault detection and isolation system of claim 1 or 2, wherein the sensed current signals comprise sensed current signals signals iₐₛ, i_{bs}, and i_{cs}, wherein the estimated current signals comprise estimated current signals îₐ, î_{b}, and î_{c}, and wherein the fault detector is configured to determine deviation values Δiₐ = iₐₛ - îₐ, Δi_{b} = i_{bs} - î_{b}, and Δi_{c} = i_{cs} - î_{c}, to determine gamma values iγ₁ = Δiₐ, and iγ₂ = - (Δi_{b} + Δi_{c}), to determine delta values ${i}_{δ 1} = \frac{\sqrt{3}}{3} \left({Δi}_{b}-{Δi}_{c}\right)$, i_{δ2} = $\frac{\sqrt{3}}{3} \left({Δi}_{a}+2{Δi}_{b}\right) , {i}_{δ 3} = - \frac{\sqrt{3}}{3} \left({Δi}_{a}+2{Δi}_{c}\right)$, to determine the plurality of phase criteria markers as ${C}_{{r}_{A}} = \left({i}_{{γ}_{2}}^{2}+{i}_{{δ}_{1}}^{2}\right) , {C}_{{r}_{B}} = \left({i}_{{γ}_{1}}^{2}+{i}_{{δ}_{3}}^{2}\right)$, and ${C}_{{r}_{C}} = \left({i}_{{γ}_{1}}^{2}+\right.$ $\left.{i}_{{δ}_{3}}^{2}\right)$, to determine the average criteria marker Cₐᵥᵣ as Cₐᵥᵣ = (C_{rA} + C_{rB} + C_{rC})/3, and to compare each of the plurality of phase criteria markers C_{rA}, C_{rB}, and C_{rC} with the average criteria marker Cₐᵥᵣ to identify the faulty phase current sensor.

4. The fault detection and isolation system of any of claims 1 to 3, wherein the fault detector comprises:
a criteria calculator and comparator configured to, in response to assertion of the imbalance signal, determine a plurality of current deviations including a current deviation between each sensed current signal and a corresponding estimated current signal, amplify the plurality of current deviations by determining a plurality of phase criteria markers indicative of phase symmetry including a phase criteria marker for each phase, and compare each of the plurality of phase criteria markers with the average criteria marker; and
a fault isolator and identifier configured to isolate and identify the faulty phase current sensor by determining whether one of the plurality of phase criteria markers falls below the average criteria marker while the remaining ones of the plurality of phase criteria markers rise above the average criteria marker.

5. The fault detection and isolation system of claims 1 to 4, wherein the fault detector comprises:
a criteria calculator and comparator configured to compare each of the plurality of phase criteria markers with the average criteria marker during successive cycles while the imbalance is detected; and
a fault isolator and identifier configured to identify the faulty phase current sensor when a count of a number of times that one of the plurality of phase criteria markers is below the average criteria marker while each of remaining ones of the plurality of phase criteria markers is above the average criteria marker during the successive cycles reaches a count threshold.

6. The fault detection and isolation system of claims 1 to 6, further comprising:
a current reconfiguration generator configured to generate reconfigured current signals using the sensed current signals and the estimated current signals; and
a selection switch configured to select between the sensed current signals and the reconfigured current signals for providing selected current signals used for generating the feedback current values.

7. The fault detection and isolation system of claim 6, wherein the current reconfiguration generator generates the reconfigured current signals by replacing a sensed current signal of the faulty phase current sensor with a corresponding estimated current signal.

8. The fault detection and isolation system of claim 6, wherein the current reconfiguration generator generates the reconfigured current signals by replacing a sensed current signal of the faulty phase current sensor with a negative sum of the remaining sense current signals.

9. The fault detection and isolation system of claims 1 to 8, wherein the estimator comprises:
a linear parameter-varying (LPV) observer, comprising:
an input interface configured to provide a sensed angular speed value, a sensed angular position value, and a plurality of physical parameters of the electric motor, and to provide a pair of control voltages in the control loop used for generating the phase current signals; and
an LPV processor including circuitry, the LPV processor configured to calculate estimated current values indicative of the phase current signals using the sensed angular speed value, the sensed angular position value, the pair of control voltages, and the plurality of physical parameters of the electric motor; and
a Clarke transformation converter configured to convert the estimated current values into the estimated current signals.

10. The fault detection and isolation system of claim 9,
wherein the input interface provides trigonometric angular position values comprising a sine function of the sensed angular position value and a cosine function of the sensed angular position value; and
wherein the plurality of physical parameters of the electric motor includes a stator winding inductance, a stator winding resistance, flux leakage, and inertia of rotor and load.

11. A method of detecting and isolating a faulty current sensor of an electric motor controller, the electric motor controller including a control loop that uses feedback current values for generating phase current signals driving an electric motor, the current sensor configured to sense the phase current signals and to provide corresponding sensed current signals, and an estimator configured for monitoring operating parameters of the electric motor and providing estimated current signals independent of the sensed current signals, the method comprising:
detecting an imbalance of the sensed current signals and asserting an imbalance signal indicative thereof; and
using, in response to assertion of the imbalance signal, the sensed current signals and the estimated current signals to determine a plurality of phase criteria markers indicative of phase symmetry including a phase criteria marker for each phase, and comparing each of the plurality of phase criteria markers with an average criteria marker to identify a faulty phase current sensor.

12. The method of claim 11, wherein the detecting an imbalance comprises determining whether a sum of the sensed current signals is within a threshold amount of a predetermined constant value.

13. The method of claim 11 or 12, wherein the sensed current signals comprise sensed current signals signals iₐₛ, i_{bs}, and i_{cs}, and wherein the estimated current signals comprise estimated current signals îₐ, î_{b}, and î_{c}, the method further comprising:
determining deviation values Δiₐ = iₐₛ - îₐ, Δi_{b} = i_{bs} - î_{b}, and Δi_{c} = i_{cs} - î_{c};
determining gamma values iγ₁ = Δiₐ and iγ₂ = - (Δi_{b} + Δi_{c});
determining delta values ${i}_{δ 1} = \frac{\sqrt{3}}{3} \left({Δi}_{b}-{Δi}_{c}\right) , {i}_{δ 2} = \frac{\sqrt{3}}{3} \left({Δi}_{a}+2{Δi}_{b}\right)$, i_{δ3} = $- \frac{\sqrt{3}}{3} \left({Δi}_{a}+2{Δi}_{c}\right)$;
determining the plurality of phase criteria markers as ${C}_{{r}_{A}} = \left({i}_{{γ}_{2}}^{2}+{i}_{{δ}_{1}}^{2}\right)$, ${C}_{{r}_{B}} = \left({i}_{{γ}_{1}}^{2}+{i}_{{δ}_{3}}^{2}\right)$, and ${C}_{{r}_{C}} = \left({i}_{{γ}_{1}}^{2}+{i}_{{δ}_{3}}^{2}\right)$;
determining the average criteria marker Cₐᵥᵣ as Cₐᵥᵣ = (C_{rA} + C_{rB} + C_{rC})/3;
comparing each of the plurality of phase criteria markers C_{rA}, C_{rB}, and C_{rC} with the average criteria marker Cₐᵥᵣ to identify the faulty phase current sensor.

14. The method of any of claims 11 to 13, in response to assertion of the imbalance signal, further comprising:
determining a plurality of current deviations including determining a current deviation between each sensed current signal and a corresponding estimated current signal;
amplifying the plurality of current deviations by determining a plurality of phase criteria markers indicative of phase symmetry including a phase criteria marker for each phase;
comparing each of the plurality of phase criteria markers with the average criteria marker; and
determining whether one of the plurality of phase criteria markers falls below the average criteria marker while the remaining ones of the plurality of phase criteria markers rise above the average criteria marker.

15. The method of claims 11 to 14, further comprising:
comparing each of the plurality of phase criteria markers with the average criteria marker during successive cycles while the imbalance is detected; and
counting a number of times that one of the plurality of phase criteria markers is below the average criteria marker while each of remaining ones of the plurality of phase criteria markers is above the average criteria marker during the successive cycles; and
identifying the faulty phase current sensor when the counting reaches a count threshold.
